# EUROPÄISCHE PATENTSCHRIFT

(11) **EP 0 962 500 B1**
(45) Veröffentlichungstag und Bekanntmachung des Hinweises auf die Patenterteilung: **28.01.2004**
(21) Anmeldenummer: 99109733.8
(22) Anmeldetag: 18.05.1999
(51) Int. Cl.: C09B 62/028, C09B 62/245, C09B 62/085, C09B 62/405

(54) **Wasserlösliche Monoazoverbindungen, Verfahren zu ihrer Herstellung und ihre Verwendung als Farbstoffe**
Water soluble monoazo compounds, process for their preparation and their use as dyestuffs
Composés monoazoiques solubles dans l'eau, leur procédé de préparation et leur utilisation comme colorants

(30) Priorität: 27.05.1998 DE 19823634
(43) Veröffentlichungstag der Anmeldung: 08.12.1999
(73) Patentinhaber: DyStar Textilfarben GmbH & Co. Deutschland KG, 65926 Frankfurt am Main (DE)
(72) Erfinder: Dannheim, Jörg, Dr., 60489 Frankfurt (DE)

(56) Entgegenhaltungen:
- EP-A- 0 065 479
- EP-A- 0 069 703
- CH-A- 339 683
- CH-A- 349 013
- DE-A- 1 444 613
- LU-A- 59 203
- US-A- 3 043 649

## Beschreibung

Die Erfindung liegt auf dem technischen Gebiet der faserreaktiven Azofarbstoffe.

Aus der Literatur sind zahlreiche Monoazoverbindungen bekannt, die beispielsweise auf Cellulosefasermaterialien farbstarke rote Färbungen liefern und in der die Diazokomponente, in der Regel jedoch die Kupplungskomponente einen faserreaktiven Rest der Halogen-pyrimidin- oder Halogen-triazin-Reihe besitzen, der über eine Aminogruppe an die Diazo- oder Kupplungskomponente gebunden ist. Als Kupplungskomponenten dienen in der Regel sulfosubstituierte Amino-1-naphthole, an die in 2-Stellung die Diazokomponente im neutralen Medium gekuppelt wird. Dagegen sind rotfärbende Azoverbindungen mit solchen faserreaktiven Resten mit einer im sauren Bereich angekuppelten 2-Aminonaphthol-Kupplungskomponente, bei welchen die Azogruppe in Nachbarstellung zur Aminogruppe, d. h. in 1-Stellung, steht, weniger kaum bekannt. Lediglich In den Dokumenten U.S Nr. 3 043 649, DE-A-1444613, CH-A-0 349 013, EP-A-0 069 703, EP-A-0 065 479, LU-A-0 059 203, DE-A-2 818 654 und EP-A-0 922 735 sind Beispiele von Monoazoverbindungen dieses Typs beschrieben, deren Farbstoffeigenschaften jedoch sehr unbefriedigend sind; mit ihnen werden lediglich schwache Färbungen und schlechte Waschechtheiten infolge eines nur geringen Fixiergrades erhalten.

Mit der vorliegenden Erfindung wurden nunmehr neue Monoazoverbindungen gefunden, die sehr gute faserreaktive Farbstoffeigenschaften besitzen, Färbungen in hoher Farbstärke liefern und zudem gute Echtheitseigenschaften besitzen, wie beispielsweise eine hohe Schweißlichtechtheit, die der allgemeinen Formel (1) 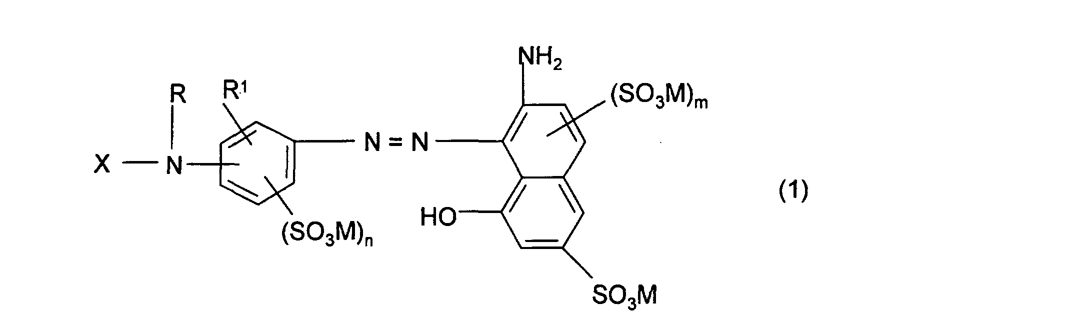 entsprechen, in welcher bedeuten:
- M: ist Wasserstoff oder ein Alkalimetall, wie Natrium, Kalium oder Lithium, oder ein anderes farbloses salzbildendes Metall, wie das Äquivalent eines Erdalkalimetalls, wie des Calciums;
- R: ist Wasserstoff oder Alkyl von 1 bis 4 C-Atomen, wie Methyl und Ethyl, oder Alkyl von 1 bis 4 C-Atomen, wie Ethyl, das durch Sulfo, Methoxy, Ethoxy, Hydroxy, Sulfato, Phosphato, Acetyloxy oder Propionyloxy substituiert sein kann, und ist bevorzugt Ethyl oder Methyl und insbesondere bevorzugt Wasserstoff;
- R¹: ist Wasserstoff, Carboxy, Alkyl von 1 bis 4 C-Atomen, wie Methyl und Ethyl, das substituiert sein kann, wie beispielsweise durch Alkoxy von 1 bis 4 C-Atomen, wie Methoxy und Ethoxy, Sulfo oder Carboxy, oder ist Alkoxy von 1 bis 4 C-Atomen, wie Methoxy und Ethoxy, das substituiert sein kann, wie beispielsweise durch Sulfo oder Carboxy, und ist bevorzugt Wasserstoff;
- m: ist die Zahl Null
- n: ist die Zahl Null, 1 oder 2 (wobei im Falle von n gleich Null diese Gruppe für Wasserstoff steht), bevorzugt 1;
- X: ist eine faserreaktive Gruppe oder Gruppierung der allgemeinen Formel (3f) 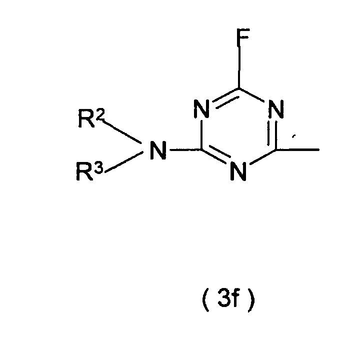
in welchen bedeuten:
- R²: ist Wasserstoff oder Alkyl von 1 bis 4 C-Atomen, das durch Hydroxy, Alkanoyloxy von 2 bis 5 C-Atomen, wie Acetyloxy, Sulfato, Phosphato, Carboxy, Sulfo oder Alkoxy von 1 bis 4 C-Atomen substituiert sein kann;
- R³: ist Wasserstoff oder Alkyl von 1 bis 4 C-Atomen, das durch Hydroxy, Alkanoyloxy von 2 bis 5 C-Atomen, wie Acetyloxy, Sulfato, Phosphato, Carboxy, Sulfo oder Alkoxy von 1 bis 4 C-Atomen substituiert sein kann, oder ist ein gegebenenfalls durch 1 oder 2 Methyl substituiertes Cyclohexyl von 5 bis 8 C-Atomen oder ist Phenyl, das durch 1 oder 2 Substituenten aus der Gruppe Sulfo, Carboxy, β-Sulfatoethylsulfonyl, Vinylsulfonyl, Chlor, Alkyl von 1 bis 4 C-Atomen, wie Ethyl und insbesondere Methyl, und Alkoxy von 1 bis 4 C-Atomen, wie Ethoxy und insbesondere Methoxy, substituiert sein kann, oder ist Naphthyl, das durch Sulfo und/oder β-Sulfatoethylsulfonyl oder Vinylsulfonyl substituiert sein kann, oder
- R² und R³: bilden zusammen ein Alkylen von 5 bis 8 C-Atomen oder ein durch -0- oder -NH- unterbrochenes Alkylen von 4 bis 6 C-Atomen und zusammen mit dem N-Atom den Rest eines gesättigten Heterocyclus, wie beispielsweise Piperidino, Morpholino oder Piperazino;
die Gruppe X-N(R)- steht an den Benzolkern in meta- oder para-Stellung, bevorzugt in meta-Stellung, zur Azogruppe gebunden;
im Falle von n gleich 1 oder 2 steht die (eine) Sulfogruppe bevorzugt in ortho-Stellung zur Azogruppe an den Benzolkern gebunden.

Sowohl in den obigen allgemeinen Formeln als auch in den nachfolgend angegebenen allgemeinen Formeln können die einzelnen Formelglieder, sowohl verschiedener als auch gleicher Bezeichnung innerhalb einer allgemeinen Formel, im Rahmen ihrer Bedeutung zueinander gleiche oder voneinander verschiedene Bedeutungen haben.

Die Gruppen "Sulfo", "Carboxy", "Phosphato" und "Sulfato" schließen sowohl deren Säureform als auch deren Salzform ein. Demgemäß bedeuten Sulfogruppen Gruppen entsprechend der allgemeinen Formel -SO₃M , Carboxygruppen Gruppen entsprechend der allgemeinen Formel -COOM , Phosphatogruppen Gruppen entsprechend der allgemeinen Formel -OPO₃M₂ und Sulfatogruppen Gruppen entsprechend der allgemeinen Formel -OSO₃M , in welchen M die obengenannte Bedeutung besitzt.

Von den Monoazoverbindungen der allgemeinen Formel (1) sind diejenigen bevorzugt, in welchen n für die Zahl 1 oder 2 steht.

Weiterhin sind solche Monoazoverbindungen der allgemeinen Formel (1) hervorzuheben, in welchen m die Zahl Null ist, n die Zahl 2 und X einen Rest der allgemeinen Formel (3f) darstellt.

Faserreaktive Gruppen der allgemeinen Formel (3f) sind beispielsweise solche, in welchen R² Wasserstoff, Methyl, Ethyl, β-Hydroxyethyl, β-Sulfatoethyl, oder β-Sulfoethyl, bevorzugt Wasserstoff, bedeutet und R³ Wasserstoff, durch Hydroxy, Sulfato, Phosphato, Carboxy, Sulfo, Methoxy oder Ethoxy substituiertes Ethyl, gegebenenfalls durch 1 oder 2 Methyl substituiertes Cyclohexyl, Phenyl oder durch 1 oder 2 Substituenten aus der Gruppe Sulfo, Carboxy, Chlor, Methyl, Ethyl, Methoxy und Ethoxy substituiertes Phenyl oder sulfo- und/oder carboxysubstituiertes Naphthyl, hiervon bevorzugt Naphth-2-yl, ist und bevorzugt sulfo- und/oder carboxysubstituiertes Phenyl, wie insbesondere Mono- oder Disulfo-phenyl, ist, so beispielsweise Methyl, Ethyl, β-Hydroxyethyl, β-Sulfatoethyl, β-Sulfoethyl, β-Methoxyethyl, β-Ethoxyethyl, Cyclohexyl, 2-Sulfophenyl, 3-Sulfophenyl, 4-Sulfophenyl, 2,5-Disulfo-phenyl, 3,5-Disulfo-phenyl, 2,4-Disulfo-phenyl, 2-Carboxyphenyl, 1-Sulfo-naphth-2-yl, 1,5-Disulfo-naphth-2-yl, 3- oder 4-(β-Sulfatoethylsulfonyl)-phenyl oder 3- oder 4-Vinylsulfonyl-phenyl; bevorzugt ist ebenfalls die Gruppe R²R³N- gleich Morpholino. Insbesondere hierbei sind bevorzugt R² gleich Wasserstoff und R³ gleich sulfo- und/oder carboxysubstituiertes Naphthyl und insbesondere bevorzugt sulfo- und/oder carboxysubstituiertes Phenyl, wie 2-, 3- oder 4-Sulfophenyl.

Gruppen der allgemeinen Formel -NR²R³ sind beispielsweise Amino, Methylamino, Ethylamino, β-Hydroxyethylamino, Dimethylamino, Diethylamino, Di-(β-hydroxyethyl)-amino, n-Propylamino, β-Sulfo-ethylamino, Di-(β-sulfoethyl)-amino, β-Sulfatoethyl-amino, Di-(β-sulfatoethyl)-amino, N-Methyl,N-(β-Sulfoethyl)-amino, Phenylamino, N-Methyl-phenylamino, 2-, 3- oder 4-Methyl-phenylamino, 2-, 3- oder 4-Sulfo-phenylamino, 2-Sulfo-4-methyl-phenylamino, N-Methyl-4-sulfo-phenylamino, 2,5-Disulfo-phenylamino, 2,4-Disulfo-phenylamino, 3,5-Disulfo-phenylamino, 2- oder 4-Carboxy-phenylamino, 2-Carboxy-5-sulfo-phenylamino, 1-Sulfo-naphth-2-ylamino, 6-Sulfo-naphth-2-ylamino oder 1,5-Disulfo-naphth-2-ylamino, hiervon insbesondere β-Sulfoethylamino, β-Sulfatoethylamino, β-Hydroxyethylamino, Di-(β-hydroxyethyl)-amino, Di-(β-sulfoethyl)-amino, Di-(β-sulfatoethyl)-amino, 2,5-Disulfo-phenylamino, 2,4-Disulfo-phenylamino, 3,5-Disulfo-phenylamino und insbesondere 2-Sulfo-phenylamino, 3-Sulfo-phenylamino und 4-Sulfo-phenylamino.

Reste der allgemeinen Formel (2) 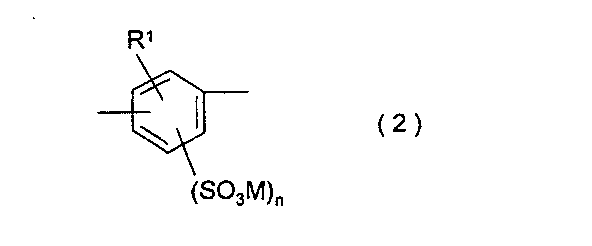 die in Formel (1) enthalten sind, sind beispielsweise 1,4-Phenylen, 1,3-Phenylen, 2-Sulfo-1,4-phenylen, 4-Sulfo-1,3-phenylen, 4,6-Disulfo-1,3-phenylen, 2, 5-Disulfo-1,4-phenylen, 2-Methyl-1,4-phenylen, 4-Methyl-1,3-phenylen, 6-Sulfo-4-methyl-1,3-phenylen, 6-Sulfo-4-methoxy-1,3-phenylen und 5-Sulfo-2-methyl-1,3-phenylen.

Die erfindungsgemäßen Monoazoverbindungen der allgemeinen Formel (1) lassen sich erfindungsgemäß auf verschiedene Art und Weise herstellen, beispielsweise durch Kupplung eines auf üblichem Wege hergestellten Diazoniumsalzes eines Amins der allgemeinen Formel (3) 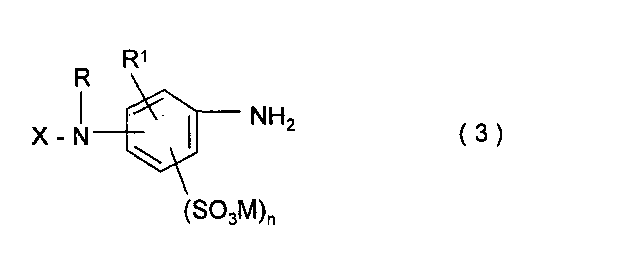 in welcher X, R, R¹, M und n die obengenannten Bedeutungen haben, mit einer Aminonaphtholverbindung der allgemeinen Formel (4) 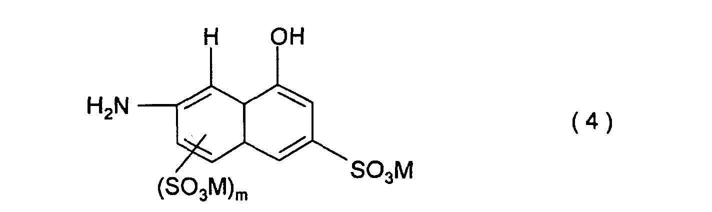 in welcher M und m die obengenannten Bedeutungen haben, bei einer Temperatur zwischen 0 und 25°C, bevorzugt zwischen 5 und 20°C, und bei einem pH-Wert von unterhalb 5, bevorzugt zwischen 0,5 und 2,5, oder daß man eine Verbindung der allgemeinen Formel (5) 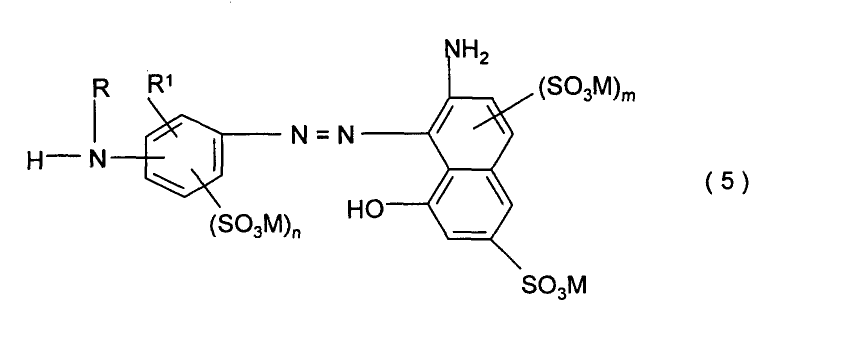 in welcher R, R', M, m und n die obengenannten Bedeutungen haben, mit einer Verbindung der allgemeinen Formel X-Hal , in welcher X ein Rest der allgemeinen Formel (3f) mit Hal gleich Fluor ist, umsetzt,
oder daß man bei der Synthese einer Monoazoverbindung der allgemeinen Formel (1), in welcher X für einen Rest der allgemeinen Formel (3f) steht, eine Verbindung der allgemeinen Formel (5) mit 2,4,6-Trifluor-1,3,5-triazin (Cyanurfluorid) umsetzt und die so erhaltene Difluor-triazinylamino-Azoverbindung mit einem Amin der allgemeinen Formel HNR²R² mit R² und R³ der obengenannten Bedeutung umsetzt.

Die Ausgangsverbindungen der allgemeinen Formel (4) sind bekannt und zahlreich in der Literatur beschrieben. Ebenso sind die Ausgangsverbindungen der allgemeinen Formel (3) und (5) bekannt oder lassen sich analog den in der Literatur bekannten Verfahrensweisen herstellen, so beispielsweise die Ausgangs-Azoverbindung der allgemeinen Formel (5) durch Diazotierung einer Aminoverbindung der allgemeinen Formel (6) 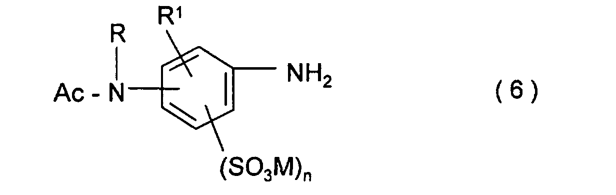 in welcher R, R¹, M und n die obengenannten Bedeutungen haben und Ac Wasserstoff oder bevorzugt einen Acylrest, wie Acetylrest, als Schutzgruppe bei der Diazotierung bedeutet, und Kupplung auf eine Verbindung der allgemeinen Formel (4) im sauren Bereich analog bekannten Verfahrensweisen und anschließend hydrolytische Abspaltung der Acylgruppe in bekannter Verfahrensweise. Die Synthese der Verbindung der allgemeinen Formel (3) kann in altbekannter Weise der Umsetzung von Aminoverbindungen mit Halogeno-pyrimdin- und Halogen-triazin-Verbindungen erfolgen, so beispielsweise, indem man eine Verbindung der allgemeinen Formel (6) der obengenannten Definition mit Ac gleich Wasserstoff mit einer Verbindung der allgemeinen Formel X-Hal mit X und Hal der obengenannten Definition umsetzt.

Die Umsetzungen der Fluortriazin-Verbindungen mit einer Aminoverbindung der allgemeinen Formel HNR²R³ erfolgt in wäßriger Lösung oder wäßriger Suspension, gegebenenfalls unter Zusatz eines inerten organischen Lösemittels, wie beispielsweise Dimethylsulfoxid, Dimethylformamid und N-Methyl-pyrrolidon. In der Regel erfolgt die Umsetzung bei einer Temperatur zwischen 0 und 30°C, bevorzugt zwischen 0 und 25°C, und bei einem pH-Wert zwischen 4 und 9, bevorzugt zwischen 5 und 8,5.

Ausgangsverbindungen der allgemeinen Formel (4) sind beispielsweise 2-Amino-8-naphthol-6-sulfonsäure, 2-Amino-8-naphthol-3,6-disulfonsäure und 2-Amino-8-naphthol-4,6-disulfonsäure.
Ausgangsverbindungen der allgemeinen Formel (6) mit Ac gleich Wasserstoff sind beispielsweise 1,4-Diamino-benzol, 1,3-Diamino-benzol, 2-Sulfo-1,4-diaminobenzol, 4-Sulfo-1,3-diaminobenzol, 4,6-Disulfo-1,3-diaminobenzol, 2,5-Disulfo-1,4-diaminobenzol, 2-Methyl-1,4-diaminobenzol, 4-Methyl-1,3-diaminobenzol, 6-Sulfo-4-methoxy-1,3-diamino-benzol, 6-Sulfo-4-methyl-1,3-diaminobenzol und 5-Sulfo-2-methyl-1,3-diaminobenzol, bevorzugt 2-Sulfo-1,4-diaminobenzol, 4,6-Disulfo-1,3-diaminobenzol, 2,5-Disulfo-1,4-diaminobenzol und insbesondere 4-Sulfo-1,3-diaminobenzol.

Die Abscheidung und Isolierung der erfindungsgemäßen Monoazoverbindungen der allgemeinen Formel (1) aus den wäßrigen Syntheselösungen kann nach allgemein bekannten Methoden für wasserlösliche Verbindungen erfolgen, so beispielsweise durch Ausfällen aus dem Reaktionsmedium mittels eines Elektrolyten, wie beispielsweise Natriumchlorid oder Kaliumchlorid, oder durch Eindampfen der Reaktionslösung selbst, beispielsweise durch Sprühtrocknung. Falls die letztgenannte Art der Isolierung gewählt wird, empfiehlt es sich vielfach, vor dem Eindampfen eventuell in den Lösungen vorhandene Sulfatmengen durch Fällung als Calciumsulfat und Abtrennung mittels Filtration zu entfernen.

Die erfindungsgemäßen Monoazoverbindungen der allgemeinen Formel (1) - im nachfolgenden als Verbindungen (1) bezeichnet - haben faserreaktive Eigenschaften und besitzen sehr wertvolle Farbstoffeigenschaften. Sie können deshalb zum Färben (einschließlich Bedrucken) von hydroxygruppenhaltigen und/oder carbonamidgruppenhaltigen Materialien verwendet werden. Hierzu können die bei der Synthese der Verbindungen (1) anfallenden Lösungen, gegebenenfalls nach Zusatz einer Puffersubstanz und gegebenenfalls auch nach Konzentrierung, direkt als Flüssigpräparation der färberischen Verwendung zugeführt werden.

Gegenstand der vorliegenden Erfindung ist deshalb auch die Verwendung der Verbindungen (1) zum Färben (einschließlich Bedrucken) von hydroxy- und/oder carbonamidgruppenhaltigen Materialien bzw. Verfahren zu deren Anwendung auf diesen Substraten. Bevorzugt kommen die Materialien in Form von Fasermaterialien zur Anwendung, insbesondere in Form von Textilfasern, wie Garnen, Wickelkörpern und Geweben. Hierbei kann man analog bekannten Verfahrensweisen vorgehen.

Hydroxygruppenhaltige Materialien sind solche natürlichen oder synthetischen Ursprungs, wie beispielsweise Cellulosefasermaterialien oder deren Regenerationsprodukte und Polyvinylalkohole. Cellulosefasermaterialien sind vorzugsweise Baumwolle, aber auch andere Pflanzenfasern, wie Leinen, Hanf, Jute und Ramiefasern; regenerierte Cellulosefasern sind beispielsweise Zellwolle und Viskosekunstseide.

Carbonamidgruppenhaltige Materialien sind beispielsweise synthetische und natürliche Polyamide und Polyurethane, insbesondere in Form von Fasern, beispielsweise Wolle und andere Tierhaare, Seide, Leder, Polyamid-6,6, Polyamid-6, Polyamid-11 und Polyamid-4.
Die Fasermaterialien lassen sich auch in Gemischen miteinander verarbeiten und färben oder können Fasermaterialien anderer chemischer Natur enthalten, wie Polyesterfasern. Beispiele hierfür sind Mischgewebe aus Cellulosefasern und Polyesterfasern sowie aus Cellulosefasern und Polyamidfasern.

Die Verbindungen (1) lassen sich, gemäß der erfindungsgemäßen Anwendung, auf den genannten Substraten, insbesondere auf den genannten Fasermaterialien, nach den für wasserlösliche, faserreaktive Farbstoffe bekannten Anwendungstechniken applizieren und fixieren, so beispielsweise, indem man die Verbindung (1) in gelöster Form auf das Substrat aufbringt oder sie darin einbringt und sie auf diesem oder in diesem durch Hitzeeinwirkung oder durch Einwirkung eines alkalisch wirkenden Mittels oder durch beide Maßnahmen fixiert. Solche Färbe- und Fixierweisen sind in der Literatur zahlreich beschrieben (bspw. in der europäischen Patentanmeldungs-Veröffentlichung Nr. 0 181 585). So eignen sich die Verbindungen (1) sowohl für das Auszieh-Färbeverfahren als auch zum Färben nach dem Foulard-Färbeverfahren, wonach die Ware mit wäßrigen, gegebenenfalls elektrolytsalzhaltigen Lösungen der Verbindungen (1) imprägniert und die Verbindung (1) in der oben angegebenen Weise auf dem Material fixiert wird. Besonders geeignet sind die Verbindungen (1) in der Anwendung nach den sogenannten Kaltverweilverfahren, wonach ein Farbstoff zusammen mit den alkalisch wirkenden Mitteln auf dem Foulard auf das Fasermaterial aufgebracht wird, auf dem er nach mehrstündigen Lagern bei Raumtemperatur fixiert. Nach dem Fixieren werden die erhaltenen Färbungen und Drucke mit kaltem und heißem Wasser, gegebenenfalls unter Zusatz eines dispergierend wirkenden und die Diffusion der nicht fixierten Anteile fordernden Mittels, gründlich gespült.

Die Verbindungen (1) zeichnen sich durch hohe Reaktivität, gutes Fixiervermögen und ein gutes Aufbauvermögen aus. Sie können daher nach dem Ausziehfärbeverfahren bei niedrigen Färbetemperaturen eingesetzt werden und erfordern bei Pad-Steam-Verfahren nur kurze Dämpfzeiten. Die Fixiergrade sind hoch und nicht fixierte Anteile können leicht ausgewaschen werden, wobei die Differenz zwischen Ausziehgrad und Fixiergrad bemerkenswert klein ist, weswegen auch der Seifverlust sehr gering ist. Die Verbindungen (1) eignen sich auch besonders in den Textildruckverfahren, vor allem auf Cellulosefasermaterialien, wie Baumwolle, ebenso aber auch zum Bedrucken von carbonamidgruppenhaltigem Fasermaterial, wie beispielsweise Wolle und Seide oder Mischgeweben, die Wolle oder Seide enthalten. Sie sind weiterhin sehr gut für den Einsatz in die Ätzdruck- und Reservedruck-Verfahren geeignet. Die mit den Verbindungen (1) hergestellten Färbungen und Drucke besitzen, insbesondere auch Cellulosefasermaterialen, eine hohe Farbstärke und eine hohe Bindungsstabilität zur Faser sowohl im sauren als auch im alkalischen Bereich, weiterhin eine gute Lichtechtheit, einschließlich einer sehr guten Naßlichtechtheit, sowie allgemein gute Naßechtheiten, wie gute Wasch-, Wasser-, Seewasser-, Überfärbe- und Schweißechtheiten sowie sehr gute Schweißlichtechtheiten, des weiteren eine gute Plissierechtheit, Bügelechtheit und Reibechtheit.

Die nachstehenden Beispiele dienen zur Erläuterung der Erfindung. Die Teile sind Gewichtsteile, die Prozentangaben stellen Gewichtsprozente dar, sofern nicht anders vermerkt. Gewichtsteile beziehen sich zu Volumenteilen wie Kilogramm zu Liter.

Die in den Beispielen formelmäßig beschriebenen Verbindungen sind in Form der freien Säuren angegeben; im allgemeinen werden sie in Form ihrer Alkalimetallsalze, wie Lithium-, Natrium- oder Kaliumsalze, hergestellt und isoliert und in Form ihrer Salze zum Färben verwendet. Ebenso können die in den nachfolgenden Beispielen, insbesondere Tabellenbeispielen, in Form der freien Säure genannten Ausgangsverbindungen und Komponenten als solche oder in Form ihrer Salze, vorzugsweise Alkalimetallsalze, in die Synthese eingesetzt werden.

Die für die erfindungsgemäßen Verbindungen angegebenen Absorptionsmaxima (λₘₐₓ) im sichtbaren Bereich wurden anhand der Alkalimetallsalze in wäßriger Lösung ermittelt. In den Tabellenbeispielen sind die λₘₐₓ-Werte bei der Farbtonangabe in Klammern gesetzt; die Wellenlängeangabe bezieht sich auf nm.

### Vergleichsbeispiel 1

Eine neutrale Lösung von 19 Teilen 1,3-Diamino-benzol-4-sulfonsäure in 4000 Vol.-Teilen Eiswasser werden mit 9 Teilen Natriumhydrogencarbonat versetzt; 17 Teile 2,4,6-Trifluor-5-chlor-pyrimidin werden hinzugegeben und der Reaktionsansatz bei 0 bis 10°C noch etwa fünf Stunden gerührt. Anschließend diazotiert man die gebildete Verbindung nach Zugabe von 19 Teilen einer 40 %igen wäßrigen Natriumnitritlösung, indem man den Reaktionsansatz langsam und stetig in eine Mischung aus 30 Teilen konzentrierter wäßriger Salzsäure und 100 Teilen Eis unter gutem Rühren gibt. Danach wird überschüssige salpetrige Säure, wie üblich, mit Amidosulfonsäure zerstört, und die Diazoniumsalzsuspension mit 23 Teilen 2-Amino-8-naphthol-6-sulfonsäure versetzt. Die Kupplung erfolgt bei einem pH-Wert zwischen 3 und 5 (der mit einer wäßrigen Natriumcarbonatlösung gehalten werden kann) und bei einer Temperatur zwischen 0 und 10°C. Man rührt noch eine Zeit weiter und isoliert sodann die erfindungsgemäße Azoverbindung der Formel (in Form der freien Säure geschrieben) 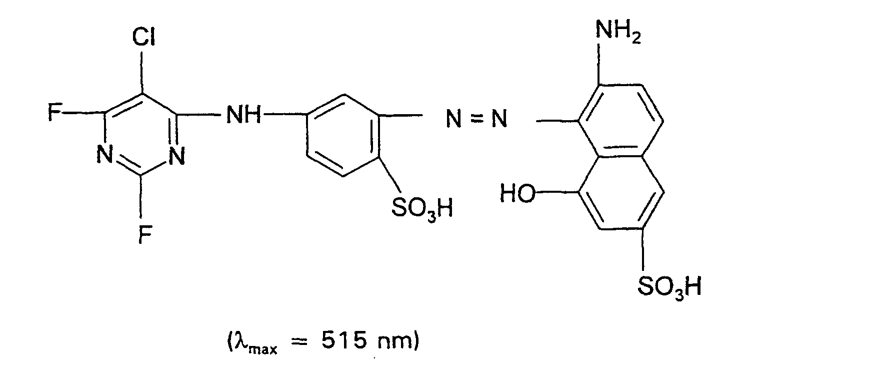 durch Aussalzen, beispielsweise mittels Natriumchlorid, als Alkalimetallsalz. Sie besitzt sehr gute faserreaktive Farbstoffeigenschaften und liefert nach den in der Technik für faserreaktive Farbstoffe üblichen Anwendungsverfahren auf den in der Beschreibung genannten Materialien, wie beispielsweise Baumwolle, farbstarke rote Färbungen und Drucke mit guten Echtheitseigenschaften, von denen insbesondere die gute Schweißlichtechtheit hervorzuheben ist.

### Beispiel 2

Eine neutrale Lösung von 23 Teilen 1,3-Diamino-benzol-4,6-disulfonsäure und 7,2 Teilen Natriumnitrit in 400 Teilen Eiswasser werden langsam und stetig in eine Mischung aus 25 Teilen konzentrierter wäßriger Salzsäure und 100 Teilen Eis eingerührt. Nach Beendigung der Diazotierung wird überschüssige salpetrige Säure, wie üblich, mittels Amidosulfonsäure zerstört. Sodann gibt man 23 Teile 2-Amino-8-naphthol-6-sulfonsäure hinzu und führt die Kupplungsreaktion bei einem pH-Wert zwischen 3 und 5 und einer Temperatur zwischen 5 und 10°C über mehrere Stunden zu Ende.

Die erhaltene Suspension wird auf einen pH-Wert von 7 gestellt und sodann mit 18 Teilen 2-Dimethylamino-4,6-difluortriazin versetzt. Man rührt die Reaktionsmischung bei einer Temperatur von 20 bis 30°C und einem pH-Wert von 7 noch etwa 6 Stunden weiter und isoliert sodann die erfindungsgemäße Azoverbindung der Formel (in Form der freien Säure geschrieben) 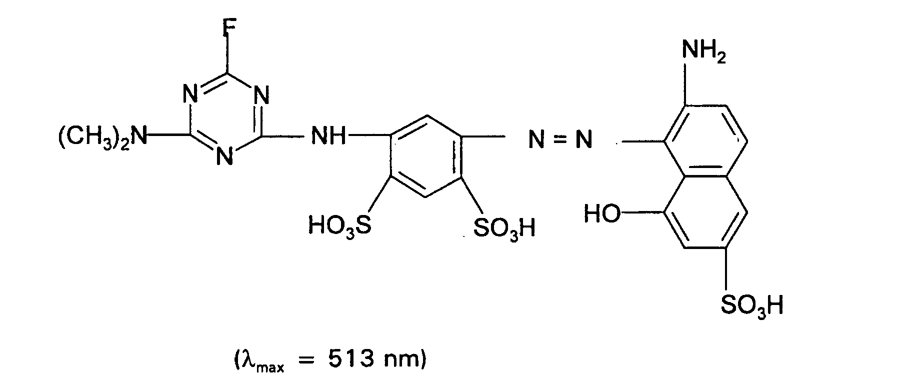 durch Aussalzen, beispielsweise mit Natriumchlorid, als Alkalimetallsalz. Sie besitzt gute Farbstoffeigenschaften und liefert nach den für faserreaktive Farbstoffe üblichen Färbe- und Druckverfahren auf den in der Beschreibung genannten Materialien, wie beispielsweise Cellulosefasermaterialien, wie Baumwolle, farbstarke rote Färbungen und Drucke mit guten Echtheitseigenschaften, von denen insbesondere die gute Schweißlichtechtheit hervorgehoben werden kann.

### Beispiel 3

17,5 Teile Anilin-3-sulfonsäure und 15,0 Teile Trifluortriazin werden entsprechend den Angaben der deutschen Offenlegungsschrift 27 46 109 miteinander umgesetzt. Zu der erhaltenen Lösung gibt man 18 Teile 1,3-Diaminobenzol-4-sulfonsäure und rührt den Ansatz noch etwa vier Stunden bei 0 bis 10°C unter Einhaltung eines pH-Wertes von 6 bis 7.

Die erhaltene Verbindung wird analog den Angaben des Vergleichsbeispiels 1 vorliegender Erfindung diazotiert und mit 23 Teilen 2-Amino-8-naphthol-6-sulfonsäure gekuppelt.

Die erfindungsgemäße Azoverbindung der Formel (in Form der freien Säure geschrieben) 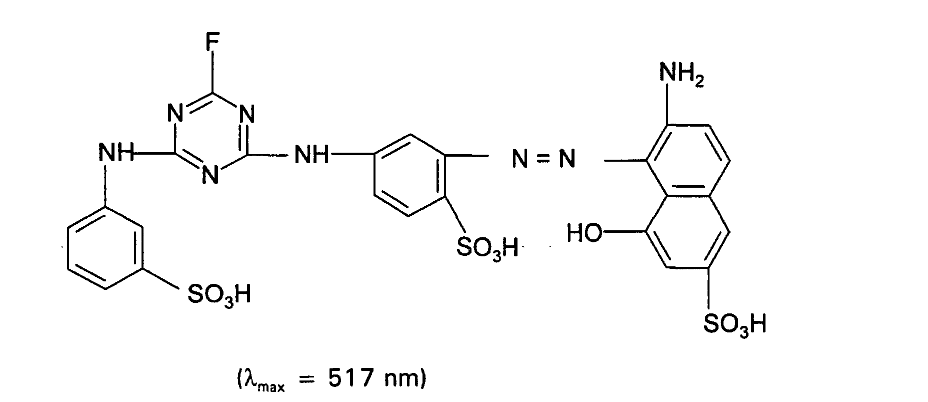 wird aus dem Syntheseansatz in üblicher Weise isoliert, beispielsweise durch Aussalzen mit Natriumchlorid. Sie eignet sich, insbesondere als Alkalimetallsalz, zum Färben der in der Beschreibung genannten Fasermaterialien, wie insbesondere Baumwolle, und liefert nach den in der Technik für faserreaktive Farbstoffe üblichen Anwendungsverfahren farbstarke rote Färbungen und Drucke mit guten Echtheitseigenschaften, von denen insbesondere die gute Schweißlichtechtheit hervorgehoben werden kann.

### Beispiel 4

a) Eine neutrale Lösung von 23 Teilen 1-Acetylamino-3-amino-4-sulfonsäure in 300 Teilen Eiswasser wird mit 19 Teilen einer 40 %igen wäßrigen Natriumnitritlösung versetzt, und die Lösung wird langsam und stetig in eine Mischung aus 30 Teilen konzentrierter wäßriger Salzsäure und 100 Teilen Eis eingerührt. Nach Entfernen überschüssiger salpetriger Säure gibt man 23 Teile 2-Amino-8-naphthol-6-sulfonsäure hinzu und führt die Kupplungsreaktion bei einem pH-Wert von 3 bis 5 und einer Temperatur von 0 bis 10°C durch.
   Die erhaltene Aminoazoverbindung der Formel (in Form der freien Säure geschrieben) 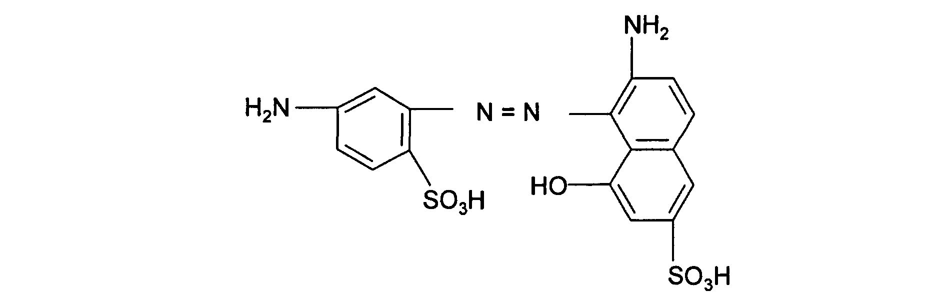 wird durch Aussalzen isoliert.
b) 42 Teile dieser Aminoazoverbindung (als Natriumsalz) werden in 800 Teilen Eiswasser gelöst. Unter gutem Rühren gibt man langsam und stetig 16 Teile Trifluortriazin hinzu, wobei man einen pH-Wert von 6 bis 7 mittels einer wäßrigen Natriumcarbonatlösung einhält. Nach einer Reaktionszeit von etwa 30 Minuten rührt man 17 Teile Anilin-3-sulfonsäure ein und führt die Umsetzung mit der gebildeten Difluor-triazinylamino-Azoverbindung bei einem pH-Wert von 6 und einer Temperatur von 0 bis 10°C unter etwa 3-stündigem Rühren zu Ende.

Die so hergestellte erfindungsgemäße Azoverbindung wird in üblicher Weise isoliert. Sie ist mit der Azoverbindung des Beispieles 3 identisch und zeigt die selben guten Farbstoffeigenschaften.

### Beispiel 5

Zur Herstellung einer erfindundungsgemäße Azoverbindung setzt man 42 Teile der gemäß Beispiel 4a) hergestellten Aminoazoverbindung gemäß den Angaben des Beispieles 4b) mit 16 Teilen Trifluortriazin um und gibt anschließend in den Ansatz mit der so gebildeten Difluor-triazinylamino-Azoverbindung der Formel 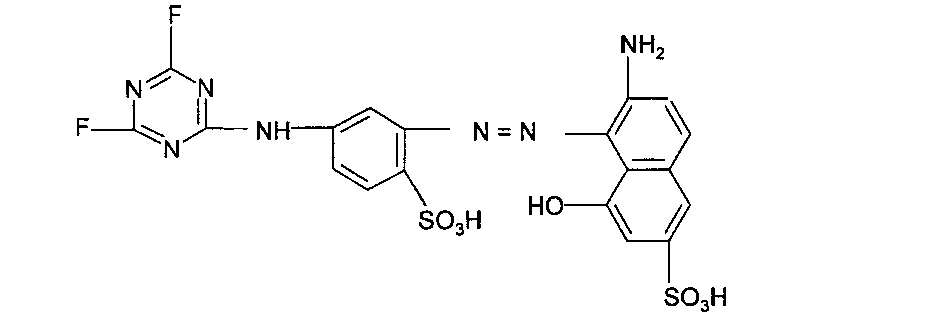 12,5 Teile β-Sulfoethylamin; die Umsetzung erfolgt bei einem pH-Wert von 8 bis 9 und einer Temperatur von 0 bis 10°C.

Die gebildete Azoverbindung der Formel (in Form der freien Säure geschrieben) 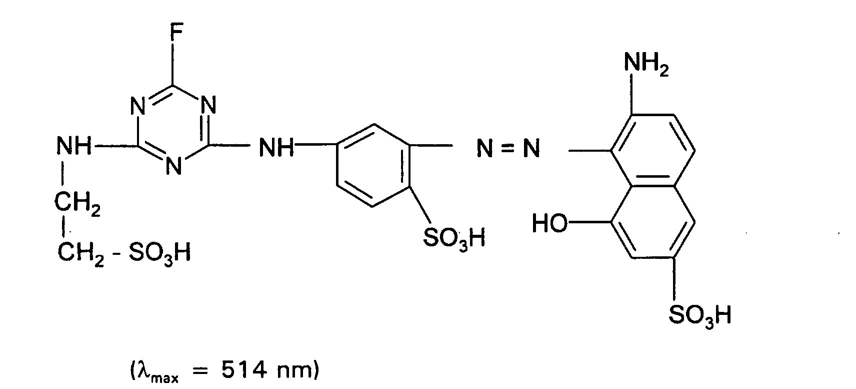 wird in üblicher Weise als Alkalimetallsalz isoliert. Sie zeigt gute Farbstoffeigenschaften und liefert beispielsweise auf Baumwolle farbstarke rote Färbungen und Drucke mit guten Echtheitseigenschaften.

### Beispiel 6

Eine neutrale Lösung von 17,3 Teilen Anilin-2-sulfonsäure in 300 Teilen Eiswasser werden langsam und stetig mit 15 Teilen Trifluortriazin unter gutem Rühren versetzt, wobei der pH-Wert mittels wäßriger Natronlauge bei 4 bis 5 gehalten wird. Man rührt noch etwa 30 Minuten nach und gibt sodann 250 Teile einer wäßrigen Lösung mit einem pH-Wert von 6 bis 7 von 17 Teilen 1,3-Diamino-benzol-4-sulfonsäure unter Rühren hinzu und rührt den Ansatz noch etwa fünf Stunden bei einem pH-Wert zwischen 6 und 7 und einer Temperatur von 0 bis 5°C weiter.

Das erhaltene Vorprodukt wird in bekannter Weise indirekt diazotiert. Die so erhaltene Diazoniumsalzlösung wird auf einen pH-Wert von 4 bis 5 eingestellt, und es wird eine Suspension von 21,5 Teilen fein gemahlener 2-Amino-8-naphthol-6-sulfonsäure in 100 Teilen Wasser eingerührt. Man führt die Kupplungsreaktion bei einer Temperatur zwischen 10 und 15°C und einem pH-Wert von 4 bis 5, der mit Natriumbicarbonat gehalten werden kann, durch.

Danach stellt man den Ansatz auf einen pH-Wert von 7,5, puffert ihn beispielsweise mit einem Gemisch aus Dinatriumhydrogenphosphat und Natriumdihydrogenphosphat ab und isoliert die erhaltene erfindungsgemäße Azoverbindung, die, in Form der freien Säure geschrieben, der Formel 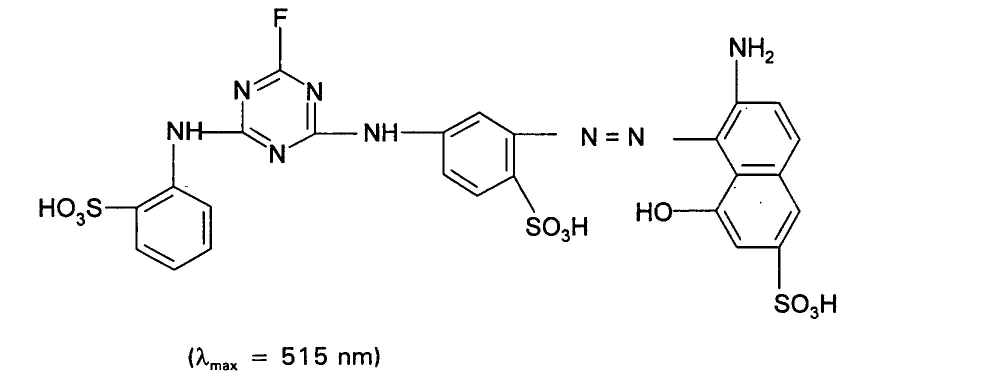 entspricht, in üblicher Weise, beispielsweise durch Aussalzen mit Natriumchlorid oder durch Sprühtrocknung.

Die erfindungsgemäße Azoverbindung besitzt sehr gute faserreaktive Farbstoffeigenschaften und liefert nach den in der Technik für faserreaktive Farbstoffe üblichen Färbe- und Druckverfahren auf den in der Beschreibung genannten Materialien, wie beispielsweise Baumwolle, farbstarke rote Färbungen und Drucke mit guten Echtheitseigenschaften, von denen insbesondere die guten Schweißechtheiten hervorzuheben sind.

### Beispiele 7 bis 29

In den nachfolgenden Tabellenbeispielen werden weitere erfindungsgemäße Azoverbindungen entsprechend der allgemeinen Formel (A) 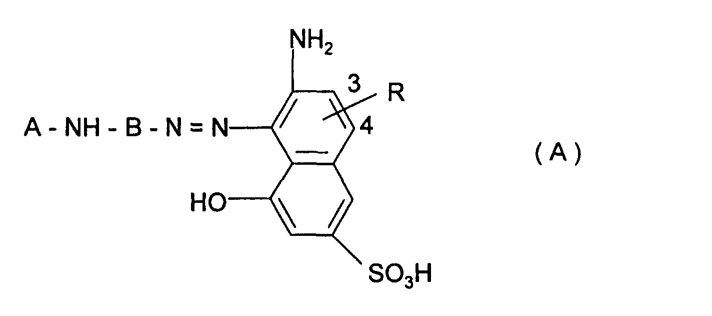 (jeweils in Form der freien Säure geschrieben) beschrieben. Sie lassen sich in erfindungsgemäßer Weise, beispielsweise analog einem der obigen Ausführungsbeispiele, aus den aus der allgemeinen Formel (A) ersichtlichen Ausgangsverbindungen herstellen. Sie besitzen sehr gute faserreaktive Farbstoffeigenschaften und liefern auf den in der Beschreibung genannten Materialien, wie insbesondere Cellulosefasermaterialien, in dem in dem jeweiligen Tabellenbeispiel (hier für Baumwolle) angegebenen Farbton in hoher Farbstärke und guten Echtheiten.

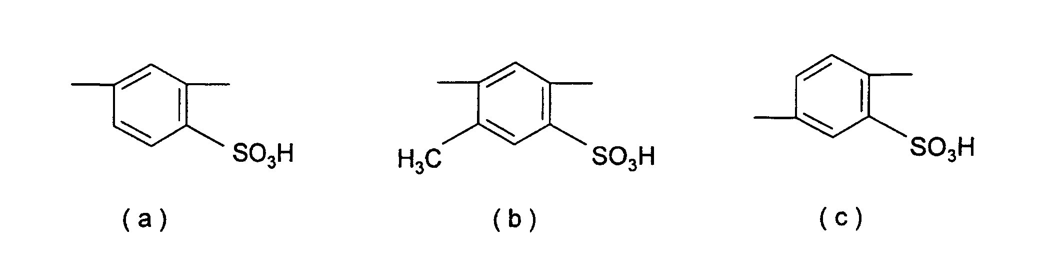

| | Verbindung der Formel (A) | | | |
|---|---|---|---|---|
| Bsp. | Rest A- | Rest -B- | Rest R | Farbton |
| 7 | 2-Fluor-4-(2'-sulfophenyl)-amino-s-triazin-6-yl | Formel (a) | Wasserstoff | rot (515) |
| 8 | 2-Fluor-4-(4'-sulfophenyl)-amino-s-triazin-6-yl | Formel (a) | Wasserstoff | rot (516) |
| 9 | 2-Fluor-4-(2'-sulfo-4'-methyl-phenyl)-amino-s-triazin-6-yl | Formel (a) | Wasserstoff | rot (514) |
| 10 | dito | Formel (c) | Wasserstoff | rot (518) |
| 11 | 2-Fluor-4-(2'-sulfophenyl)-amino-s-triazin-6-yl | Formel (c) | Wasserstoff | rot (518) |
| 12 | 2-Fluor-4-(3'-sulfophenyl)-amino-s-triazin-6-yl | Formel (c) | Wasserstoff | rot (519) |
| 13 | 2-Fluor-4-(2'-carboxy-phenyl)-amino-s-triazin-6-yl | Formel (c) | Wasserstoff | rot (518) |
| 14 | 2-Fluor-4-(1'-sulfo-naphth-2'-yl)-amino-s-triazin-6-yl | Formel (a) | Wasserstoff | rot (514) |
| 15 | dito | Formel (a) | Wasserstoff | rot (515) |
| 16 | 2-Fluor-(1',5'-disulfo-naphth-2'-yl)-amino-s-triazin-6-yl | 4,6-Disulfo-1,3-phenylen | Wasserstoff | rot (513) |
| 17 | dito | dito | Wasserstoff | rot (520) |
| 18 | 2-Fluor-4-(2'-sulfophenyl)-amino-s-triazin-6-yl | dito | Wasserstoff | rot (512) |
| 19 | 2-Fluor-4-(2'-sulfo-4'-methyl-phenyl)-amino-s-triazin-6-yl | dito | Wasserstoff | rot (515) |
| 20 | 2-Fluor-4-(3'-sulfophenyl)-amino-s-triazin-6-yl | dito | Wasserstoff | rot (516) |
| 21 | 2,4-Difluor-pyrimidin-6-yl | Formel (a) | Wasserstoff | rot (514) |
| 22 | 2-Fluor-4-amino-s-triazin-6-yl | Formel (a) | Wasserstoff | rot (515) |
| 23 | 2-Fluor-4-methylamino-s-triazin-6-yl | Formel (a) | Wasserstoff | rot (513) |
| 24 | 2-Fluor-4-phenylamino-s-triazin-6-yl | Formel (a) | Wasserstoff | rot (511) |
| 25 | 2-Fluor-4-(4'-chlor-phenyl)-amino-s-triazin-6-yl | Formel (a) | Wasserstoff | rot (516) |
| 26 | 2-Fluor-4-dimethylamino-s-triazin-6-yl | Formel (a) | Wasserstoff | rot (514) |
| 27 | 2-Fluor-4-ethylamino-s-triazin-6-yl | Formel (a) | Wasserstoff | rot (517) |
| 28 | 2-Fluor-4-[4'-(β-sulfatoethyl-sulfonyl)-phenyl]-amino-s-triazin-6-yl | Formel (a) | Wasserstoff | rot (517) |
| 29 | 2-Fluor-4-[3'-(β-sulfatoethyl-sulfonyl)-phenyl]-amino-s-triazin-6-yl | Formel (a) | Wasserstoff | rot (515) |

## Patentansprüche

1. Monoazoverbindung entsprechend der allgemeinen Formel (1) 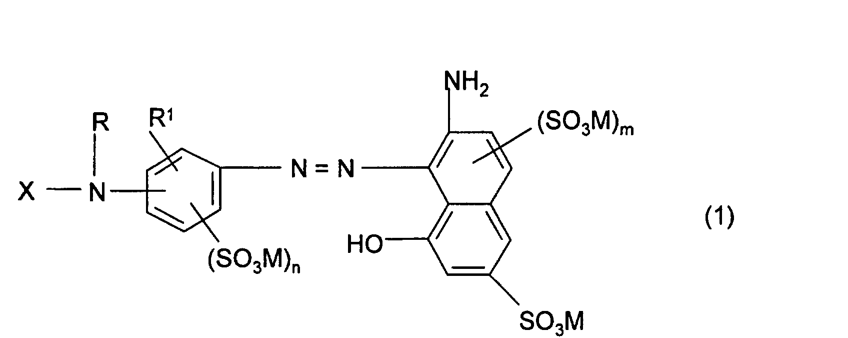 in welcher bedeuten:
M ist Wasserstoff oder ein Alkalimetall oder ein anderes farbloses salzbildendes Metall;
R ist Wasserstoff oder Alkyl von 1 bis 4 C-Atomen oder Alkyl von 1 bis 4 C-Atomen, das durch Sulfo, Methoxy, Ethoxy, Hydroxy, Sulfato, Phosphato, Acetyloxy oder Propionyloxy substituiert sein kann;
R¹ ist Wasserstoff, Carboxy, Alkyl von 1 bis 4 C-Atomen, das substituiert sein kann, oder ist Alkoxy von 1 bis 4 C-Atomen, das substituiert sein kann;
m ist die Zahl Null (wobei im Falle von m gleich Null diese Gruppe für Wasserstoff steht);
n ist die Zahl Null, 1 oder 2 (wobei im Falle von n gleich Null diese Gruppe für Wasserstoff steht);
X ist eine faserreaktive Gruppe oder Gruppierung der allgemeinen Formel (3f) 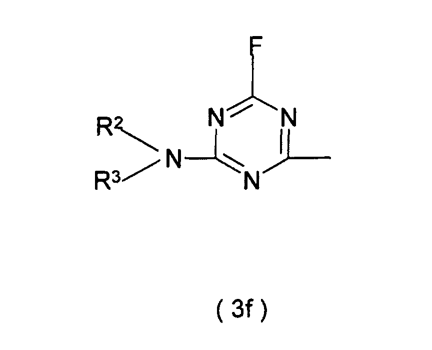
in welchen bedeuten:
R² ist Wasserstoff oder Alkyl von 1 bis 4 C-Atomen, das durch Hydroxy, Alkanoyloxy von 2 bis 5 C-Atomen, wie Acetyloxy, Sulfato, Phosphato, Carboxy, Sulfo oder Alkoxy von 1 bis 4 C-Atomen substituiert sein kann;
R³ ist Wasserstoff oder Alkyl von 1 bis 4 C-Atomen, das durch Hydroxy, Alkanoyloxy von 2 bis 5 C-Atomen, wie Acetyloxy, Sulfato, Phosphato, Carboxy, Sulfo oder Alkoxy von 1 bis 4 C-Atomen substituiert sein kann, oder ist ein gegebenenfalls durch 1 oder 2 Methyl substituiertes Cyclohexyl von 5 bis 8 C-Atomen oder ist Phenyl, das durch 1 oder 2 Substituenten aus der Gruppe Sulfo, Carboxy, β-Sulfatoethylsulfonyl, Vinylsulfonyl, Chlor, Alkyl von 1 bis 4 C-Atomen und Alkoxy von 1 bis 4 C-Atomen substituiert sein kann, oder ist Naphthyl, das durch Sulfo und/oder β-Sulfatoethylsulfonyl oder Vinylsulfonyl substituiert sein kann, oder
R² und R³ bilden zusammen ein Alkylen von 5 bis 8 C-Atomen oder ein durch -O- oder -NH- unterbrochenes Alkylen von 4 bis 6 C-Atomen und zusammen mit dem N-Atom den Rest eines gesättigten Heterocyclus;
die Gruppe X-N(R)- steht an den Benzolkern in meta- oder para-Stellung zur Azogruppe gebunden.

2. Monoazoverbindung nach Anspruch 1, **dadurch gekennzeichnet, daß** R Ethyl, Methyl oder Wasserstoff ist.

3. Monoazoverbindung nach Anspruch 1 oder 2, **dadurch gekennzeichnet, daß** R¹ Wasserstoff ist.

4. Monoazoverbindung nach mindestens einem der Ansprüche 1 bis 3, **dadurch gekennzeichnet, daß** X ein Rest der allgemeinen Formel (3f) ist, n für die Zahl 1 oder 2 steht und m die Zahl Null ist.

5. Monoazoverbindung nach mindestens einem der Ansprüche 1 bis 4, **dadurch gekennzeichnet, daß** X ein Rest der allgemeinen Formel (3f) ist, in welcher R² Wasserstoff ist und R³ Phenyl oder durch 1 oder 2 Substituenten aus der Gruppe Sulfo, Carboxy, Chlor, Methyl, Ethyl, Methoxy und Ethoxy substituiertes Phenyl oder sulfo- und/oder carboxysubstituiertes Naphthyl ist.

6. Monoazoverbindung nach Anspruch 5, **dadurch gekennzeichnet, daß** R² Wasserstoff und R³ Mono- oder Disulfo-phenyl ist.

7. Verfahren zur Herstellung einer Monoazoverbindung der in Anspruch 1 genannten und definierten Formel (1), **dadurch gekennzeichnet, daß** man ein Diazoniumsalz eines Amins der allgemeinen Formel (3) 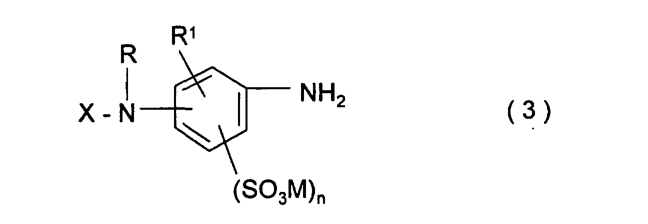 in welcher X, R, R¹, M und n die in Anspruch 1 genannten Bedeutungen haben, mit einer Aminonaphtholverbindung der allgemeinen Formel (4) 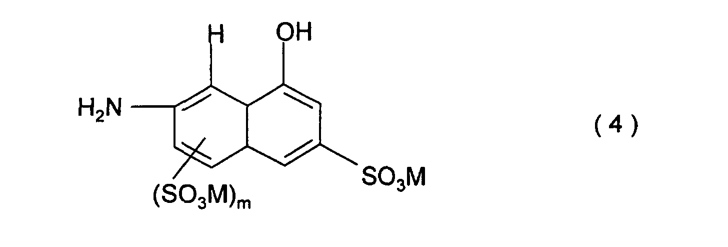 in welcher M und m die in Anspruch 1 genannten Bedeutungen haben, bei einer Temperatur zwischen 0 und 25°C und bei einem pH-Wert von unterhalb 5 kuppelt, oder daß man eine Verbindung der allgemeinen Formel (5) 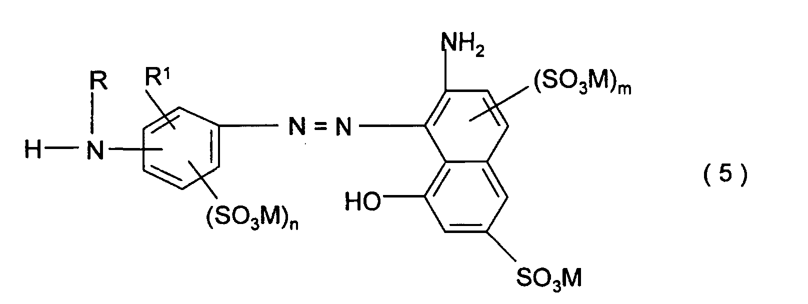 in welcher R, R¹, M, m und n die in Anspruch 1 genannten Bedeutungen haben, mit einer Verbindung der allgemeinen Formel X-Hal , in welcher X ein Rest der allgemeinen Formel (3f) umsetzt,
oder daß man bei der Synthese einer Monoazoverbindung der allgemeinen Formel (1), in welcher X für einen Rest der allgemeinen Formel (3f) steht, eine Verbindung der allgemeinen Formel (5) mit 2,4,6-Trifluor-1,3,5-triazin umsetzt und die erhaltene Difluor-triazinylamino-Azoverbindung mit einem Amin der allgemeinen Formel HNR²R³ mit R² und R³ der in Anspruch 1 genannten Bedeutung umsetzt.

8. Verwendung eines Farbstoffes von Anspruch 1 oder eines nach Anspruch 7 hergestellten Farbstoffes zum Färben von hydroxy- und/oder carbonamidgruppenhaltigem Material, insbesondere Fasermaterial.

9. Verfahren zum Färben von hydroxy- und/oder carbonamidgruppenhaltigem Material, insbesondere Fasermaterial, bei welchem man einen Farbstoff auf das Material aufbringt und den Farbstoff auf dem Material mittels Wärme oder mit Hilfe eines alkalisch wirkenden Mittels oder mittels beider Maßnahmen fixiert, **dadurch gekennzeichnet, dass** man als Farbstoff einen Farbstoff von Anspruch 1 oder einen nach Anspruch 7 hergestellten Farbstoff einsetzt.

## Claims

1. A monoazo compound conforming to the general formula (1) 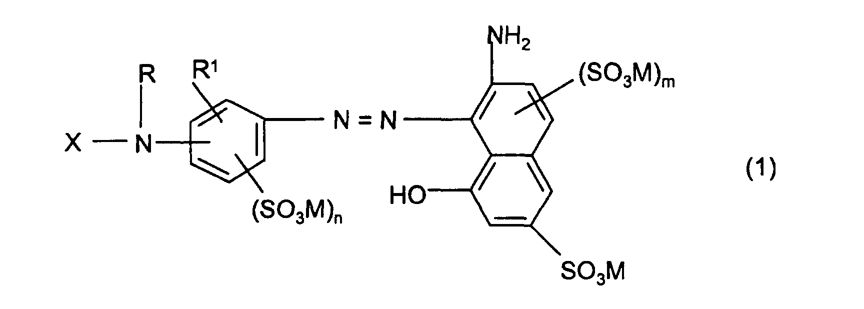 where :
M is hydrogen or an alkali metal, or some other colorless salt-forming metal;
R is hydrogen or alkyl of 1 to 4 carbon atoms, or alkyl of 1 to 4 carbon atoms, which may be substituted by sulfo, methoxy, ethoxy, hydroxyl, sulfato, phosphato, acetyloxy or propionyloxy;
R¹ is hydrogen, carboxyl, alkyl of 1 to 4 carbon atoms, which may be substituted, or is alkoxy of 1 to 4 carbon atoms, which may be substituted;
m is zero (this group being hydrogen in the case of m being zero);
n is zero, 1 or 2 (this group being hydrogen in the case of n being zero);
X is a fiber-reactive group or grouping of the general formula (3f) 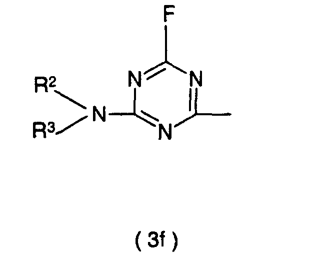
where
R² is hydrogen or alkyl of 1 to 4 carbon atoms, which may be substituted by hydroxyl, alkanoyloxy of 2 to 5 carbon atoms, such as acetyloxy, sulfato, phosphato, carboxyl, sulfo or alkoxy of 1 to 4 carbon atoms;
R³ is hydrogen or alkyl of 1 to 4 carbon atoms, which may be substituted by hydroxyl, alkanoyloxy of 2 to 5 carbon atoms, such as acetyloxy, sulfato, phosphato, carboxyl, sulfo or alkoxy of 1 to 4 carbon atoms, or is an optionally methyl-monosubstituted or -disubstituted cycloalkyl of 5 to 8 carbon atoms or is phenyl which may be substituted by 1 or 2 substituents selected from the group consisting of sulfo, carboxyl, β-sulfatoethylsulfonyl, vinylsulfonyl, chlorine, alkyl of 1 to 4 carbon atoms and alkoxy of 1 to 4 carbon atoms, or is naphthyl which may be substituted by sulfo and/or β-sulfatoethylsulfonyl or vinylsulfonyl, or
R² and R³ combine to form an alkylene of 5 to 8 carbon atoms or an alkylene of 4 to 6 carbon atoms which is interrupted by -O- or -NH- and with the nitrogen atom to form the radical of a saturated heterocycle;
the X-N(R)- group is disposed on the benzene nucleus in a position meta or para to the azo group.

2. The monoazo compound of claim 1, wherein R is ethyl, methyl or hydrogen.

3. The monoazo compound of claim 1, wherein R¹ is hydrogen.

4. The monoazo compound of at least one of claims 1 to 3, wherein X is a radical of the general formula (3f), n is 1 or 2 and m is zero.

5. The monoazo compound of at least one of claims 1 to 4, wherein X is a radical of the formula (3f) where R² is hydrogen and R³ is phenyl or phenyl substituted by 1 or 2 substituents selected from the group consisting of sulfo, carboxyl, chlorine, methyl, ethyl, methoxy and ethoxy or sulfo- and/or carboxyl-substituted naphthyl.

6. The monoazo compound of claim 5, wherein R² is hydrogen and R³ is mono- or disulfophenyl.

7. A process for preparing a monoazo compound of the formula (1) mentioned and defined in claim 1, which comprises coupling a diazonium salt of an amine of the general formula (3) 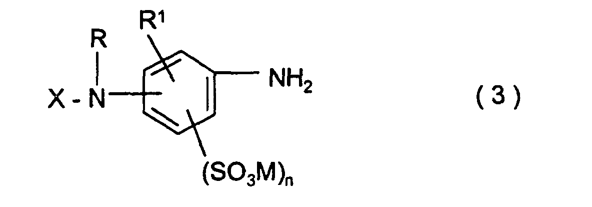 where X, R, R¹, M and n are each as defined in claim 1, with an amino naphthol compound of the general formula (4) 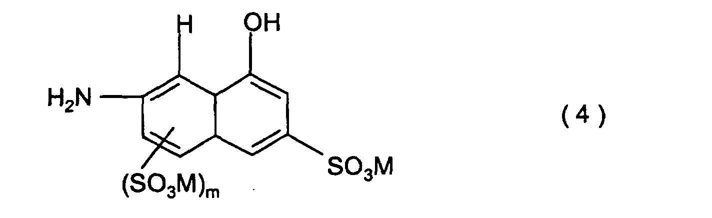 where M and m are each as defined in claim 1, at a temperature between 0 and 25°C, and at a pH of below 5, or reacting a compound of the formula (5) 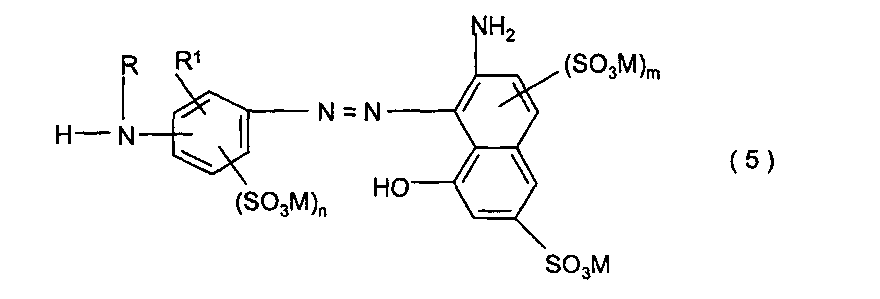 where R, R¹, M, m and n are each as defined in claim 1, with a compound of the general formula X-Hal, where X is a radical of the general formula (3f),
or, in the synthesis of a monoazo compound of the general formula (1) where X is a radical of the general formula (3f), reacting a compound of the general formula (5) with 2,4,6-trifluoro-1,3,5-triazine and reacting the resulting difluorotriazinylamino azo compound with an amine of the general formula HNR²R³ where R² and R³ are each as defined in claim 1.

8. The use of a dye as claimed in claim 1 or of a dye as prepared as claimed in claim 7 for dyeing hydroxyl- and/or carboxamido-containing material, especially fiber material.

9. A process for dyeing hydroxyl- and/or carboxamido-containing material, especially fiber material, by applying a dye to the material and fixing the dye on the material by means of heat or with the aid of an alkaline agent or by means of both measures, which comprises using a dye as claimed in claim 1 or a dye prepared as claimed in claim 7.

## Revendications

1. Composé monoazoïque correspondant à la formule générale (1) 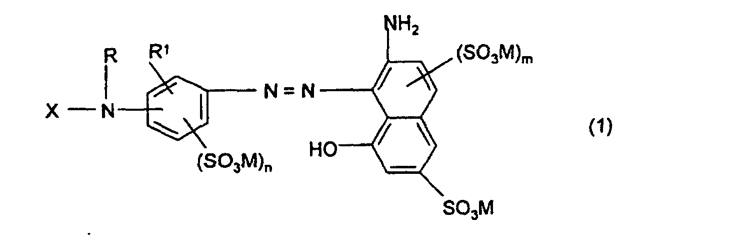 dans laquelle :
M représente un hydrogène ou un métal alcalin ou un autre métal incolore formant des sels ;
R représente un hydrogène ou un alkyle ayant de 1 à 4 atomes de carbone ou un alkyle ayant de 1 à 4 atomes de carbone pouvant être substitué par un sulfo, un méthoxy, un éthoxy, un hydroxy, un sulfato, un phosphato, un acétyloxy ou un propionyloxy ;
R¹ représente un hydrogène, un carboxy, un alkyle ayant de 1 à 4 atomes de carbone pouvant être substitué, ou un alcoxy ayant de 1 à 4 atomes de carbone pouvant être substitué ;
m représente le nombre zéro (ce groupe représentant un hydrogène dans le cas où m vaut zéro) ;
n représente le nombre zéro, 1 ou 2 (ce groupe représentant un hydrogène dans le cas où n vaut zéro) ;
X représente un groupe réactif sur la fibre ou un groupement de formule générale (3f) 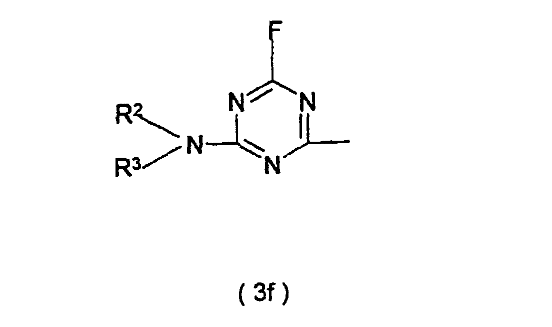
dans laquelle :
R² représente un hydrogène ou un alkyle ayant de 1 à 4 atomes de carbone pouvant être substitué par un hydroxy, un alcanoyloxy ayant de 2 à 5 atomes de carbone, tel qu'un acétyloxy, un sulfato, un phosphato, un carboxy, un sulfo ou un alcoxy ayant de 1 à 4 atomes de carbone ;
R³ représente un hydrogène ou un alkyle ayant de 1 à 4 atomes de carbone pouvant être substitué par un hydroxy, un alcanoyloxy ayant de 2 à 5 atomes de carbone, tel qu'un acétyloxy, un sulfato, un phosphato, un carboxy, un sulfo ou un alcoxy ayant de 1 à 4 atomes de carbone, ou représente un cyclohexyle ayant de 5 à 8 atomes de carbone, éventuellement substitué par 1 ou 2 groupes méthyle, ou représente un phényle pouvant être substitué par 1 ou 2 substituants parmi le groupe constitué d'un sulfo, d'un carboxy, d'un β-sulfatoéthylsulfonyle, d'un vinylsulfonyle, d'un chloro, d'un alkyle ayant de 1 à 4 atomes de carbone et d'un alcoxy ayant de 1 à 4 atomes de carbone, ou représente un naphtyle pouvant être substitué par un sulfo et/ou un β-sulfatoéthylsulfonyle ou un vinylsulfonyle, ou
R² et R³ forment conjointement un alkylène ayant de 5 à 8 atomes de carbone ou un alkylène ayant de 4 à 6 atomes de carbone interrompu par -O- ou -NH-, et le radical d'un hétérocycle saturé conjointement avec l'atome d'azote ;
le groupe X-N(R)- est lié au noyau benzénique en position méta ou para par rapport au groupe azo.

2. Composé monoazoïque selon la revendication 1, **caractérisé en ce que** R représente un éthyle, un méthyle ou un hydrogène.

3. Composé monoazoïque selon la revendication 1 ou 2, **caractérisé en ce que** R¹ représente un hydrogène.

4. Composé monoazoïque selon au moins l'une des revendications 1 à 3, **caractérisé en ce que** X représente un radical de formule générale (3f), n représente le nombre 1 ou 2 et m représente le nombre zéro.

5. Composé monoazoïque selon au moins l'une des revendications 1 à 4, **caractérisé en ce que** X représente un radical de formule générale (3f), dans laquelle R² représente un hydrogène et R³ représente un phényle ou un phényle substitué par 1 ou 2 substituants parmi le groupe constitué d'un sulfo, d'un carboxy, d'un chloro, d'un méthyle, d'un éthyle, d'un méthoxy et d'un éthoxy, ou un naphtyle sulfo- et/ou carboxy-substitué.

6. Composé monoazoïque selon la revendication 5, **caractérisé en ce que** R² représente un hydrogène et R³ représente un mono- ou un disulfophényle.

7. Procédé de préparation d'un composé monoazoïque de formule (1) mentionnée et définie dans la revendication 1, **caractérisé en ce qu'**un sel de diazonium d'une amine de formule générale (3) 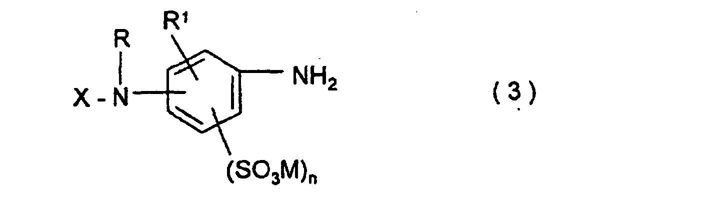 dans laquelle X, R, R¹, M et n présentent les significations mentionnées dans la revendication 1, est couplé avec un composé aminonaphtol de formule générale (4) 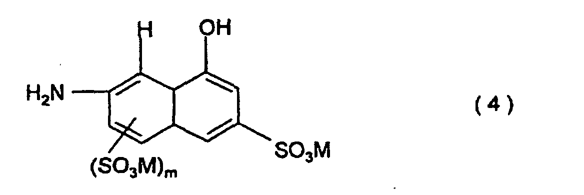 dans laquelle M et m présentent les significations mentionnées dans la revendication 1, à une température comprise entre 0 et 25°C et à un pH inférieur à 5, ou **en ce qu'**un composé de formule générale (5) 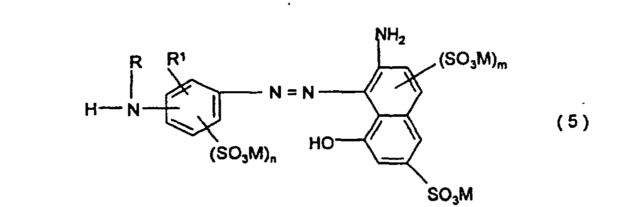 dans laquelle R, R¹, M, m et n présentent les significations mentionnées dans la revendication 1, est mis à réagir avec un composé de formule générale X-Hal, dans laquelle X représente un radical de formule générale (3f),
ou **en ce que** lors de la synthèse d'un composé monoazoïque de formule générale (1), dans laquelle X représente un radical de formule générale (3f), un composé de formule générale (5) est mis à réagir avec la 2,4,6-trifluoro-1,3,5-triazine et le composé difluoro-triazinylamino-azoïque obtenu est mis à réagir avec une amine de formule générale HNR²R³ dans laquelle R² et R³ présentent la signification mentionnée dans la revendication 1.

8. Utilisation d'un colorant selon la revendication 1 ou d'un colorant préparé selon la revendication 7 pour la teinture d'une matière renfermant des groupes hydroxy et/ou carbonamide, en particulier d'une matière fibreuse.

9. Procédé de teinture d'une matière renfermant des groupes hydroxy et/ou carbonamide, en particulier d'une matière fibreuse, dans lequel un colorant est appliqué sur la matière et le colorant est fixé sur la matière par la chaleur ou à l'aide d'un agent alcalin ou au moyen des deux mesures, **caractérisé en ce que** le colorant utilisé est un colorant selon la revendication 1 ou un colorant préparé selon la revendication 7.
